Europäisches Patentamt

European Patent Office

Office européen des brevets

(11) Veröffentlichungsnummer: **0 297 428**
**A1**

## (12) EUROPÄISCHE PATENTANMELDUNG

(21) Anmeldenummer: 88109982.4

(22) Anmeldetag: 23.06.88

(51) Int. Cl.⁴: **C12C 7/00**

(30) Priorität: 24.06.87 DE 3720864

(43) Veröffentlichungstag der Anmeldung:
04.01.89 Patentblatt 89/01

(84) Benannte Vertragsstaaten:
**AT ES FR GB IT**

(71) Anmelder: **HRCH. HUPPMANN GMBH, MASCHINENFABRIK**
**Schwarzacher Strasse 51**
**D-8710 Kitzingen(DE)**

(72) Erfinder: **Kühtreiber, Franz, Dr.**
**Marktplatz 26a**
**A-2136 L a a /Thaya(AT)**

(74) Vertreter: **Fuchs, Richard**
**Kantstrasse 18**
**D-8700 Würzburg(DE)**

(54) **Verfahren zum zusätzlichen Aufschluss von Malzinhaltsstoffen bei Maischen für die Biererzeugung.**

(57) Um bei Maischen für die Biererzeugung einen zusätzlichen Aufschluß der Malzinhaltsstoffe zu erreichen, der zu einer entsprechenden Erhöhung der Sudhausausbeute führt, wird die Maische mit einer Temperatur von höchstens ca. 100°C in einen unter Unterdruck stehenden Entspannungskühlraum geführt. In diesem findet eine plötzliche Druckentlastung der Maische statt, in deren Verlauf die Malzteilchen weiter zerfallen bzw. aufgeschlossen werden. Anschließend wird die aus dem Entspannungskühlraum ablaufende, abgekühlte Maische mit technischen Enzymen oder einer enzymhaltigen Malzmaische-Teilmenge vermischt.

EP 0 297 428 A1

## Verfahren zum zusätzlichen Aufschluß von Malzinhaltsstoffen bei Maischen für die Biererzeugung

Die Erfindung bezieht sich auf ein Verfahren zum zusätzlichen Aufschluß von Malzinhaltsstoffen bei Maischen für die Biererzeugung.

Während des Ablaufs eines Maischverfahrens im Sudhaus kommt es zum enzymatischen Abbau von Malzinhaltsstoffen. Diese löslichen Substanzen ergeben dann die Würze, deren Qualität und Menge unter anderem vom Grad der Auflösung dieser Malzinhaltsstoffe abhängig ist.

Zur Verbesserung des Aufschlusses der Malzteilchen in Malzmaischen ist es bekannt, die Maischen unter Druck zu kochen. Diese Druckmaischeverfahren haben sich jedoch nicht bewährt, denn diese Methode zur möglichst vollständigen Ausnutzung des Rohmaterials führt zu einer Verschlechterung der Bierqualität.

Durch die US-PS 2 451 510 ist ein Verfahren bekannt, bei dem Spiritusmaische in einem Druckgefäß bei Temperaturen zwischen 100°C bis 160°C gekocht und anschließend in ein Entspannungsgefäß geleitet wird, in dem Drücke im Vakuumbereich vorliegen. Durch die plötzliche Druckentlastung der Spiritusmaische im Entspannungsgefäß wird ein entsprechend hoher Grad an Substanzaufschluß erzielt. Solche Spiritusmaischen enthalten als Hauptbestandteil ungemälzte Rohfrucht, der bei dem bekannten Verfahren im Druckkocher und in dem Entspannungskühler eine geringe Menge Malz zugesetzt wird, um die Maische ausreichend flüssig zu halten bzw. danach zu verzuckern. Dieses bekannte Verfahren ist jedoch nicht ohne weiteres für einen zusätzlichen Malzaufschluß bei Malzmaische für die Biererzeugung anwendbar. Es ist nämlich in der Brautechnologie allgemein bekannt und bereits vorstehend erwähnt, daß das Kochen von Malzmaische unter Druck sich nachteilig auf die Qualität der erhaltenen Würze auswirkt und daher nirgends praktiziert wird. Hinzu kommt, daß sich jeder Bierbrauer an einer Standardmethode, dem sogenannten Kongreß-Maischverfahren orientiert, wonach die theoretisch mögliche Malzausbeute bestimmt wird. Diese Ausbeute stellt für ihn das technisch mögliche Maximum dar, d.h. der heutige Stand der Brautechnologie ist auf diese theoretisch mögliche Malzausbeute fixiert und diese theoretisch mögliche Malzausbeute wird in modernen Sudhausanlagen erreicht.

Der Erfindung liegt die Aufgabe zugrunde, den Grad des Malzaufschlusses bzw. den Grad der Auflösung der löslichen Substanzen bei Malzmaische für die Biererzeugung weiter zu steigern und damit die Sudhausausbeute im Vergleich zum Stand der Technik zu erhöhen.

Gemäß der Erfindung wird diese Aufgabe dadurch gelöst, daß die Malzmaische mit einer Temperatur von höchstens ca. 100°C zur plötzlichen Druckentlastung in einen unter Unterdruck stehenden Entspannungskühlraum geführt und die abgekühlte Malzmaische mit technischen Enzymen oder einer enzymhaltigen Malzmaischemenge vermischt wird, die nur einen Bruchteil der Gesamtmaischemenge ausmacht. Der Vorteil des erfindunsgemäßen Verfahrens besteht darin, daß aufgrund des zusätzlichen Malzaufschlusses die Sudhausausbeute bis zu 4 % über der sogenannten Laborausbeute liegen kann. Aus Qualitätsgründen ist es dabei ferner von Vorteil, daß man selbst mit den höchsten Maischetemperaturen immer unter ca. 100°C bleiben kann. Dabei gilt folgendes: Je höher die Maischetemperatur über der dem vorgegebenen, dem Unterdruck im Entspannungskühlraum entsprechenden Siedetemperatur liegt, umso besser ist der Aufschlußeffekt. Durch die plötzliche Druckentlastung der Malzmaische auf Drücke im Vakuumbereich wird die Oberfläche des aufzuschließenden Guts vergrößert und damit ein besserer und schnellerer Malzaufschluß im Vergleich zum Stand der Technik erreicht. Die Folge ist die schon oben erwähnte entsprechend höhere Sudhausausbeute. Ein weiterer Vorteil des erfindungsgemäßen Verfahrens besteht darin, daß unangenehme Geruchssubstanzen bereits im Zuge der plötzlichen Druckentlastung der Malzmaische ausgedampft werden und nicht erst während des folgenden Würzekochprozesses.

Ausgestaltungen der Erfindung gehen aus den Unteransprüchen hervor.

So wird zur weiteren Verbesserung des Aufschließungsgrades die Malzmaische zweckmäßig feinverteilt in den Entspannungskühlraum eingepumpt.

Nach noch einer weiteren Ausgestaltung der Erfindung wird die Malzmaische vor ihrem Eintritt in den Entspannungskühlraum unter geringem Druck gehalten. Dadurch wird eine unerwünschte Verdampfung in der Maischezuleitung zum Entspannungskühlraum vermieden.

Nach noch einer weiteren Ausgestaltung der Erfindung findet die Vermischung der Malzmaische mit technischen Enzymen oder einer enzymhaltigen Malzmaische-Teilmenge sofort nach erfolgtem zusätzlichen Stärkeaufschluß statt. Man ermöglicht dadurch alle zur Erzielung einer qualitativ hochwertigen Würze noch notwendigen enzymatischen Abläufe.

Wenn nach noch einer Weiterbildung der Erfindung die beim Eintritt der Malzmaische in den Entspannungskühlraum erzeugten Brüden in einen Kondensationsraum geführt und durch Kühlwasserstrahlen niedergeschlagen werden, werden vorteilhaft unangenehme Geruchssubstanzen aus den Brüden praktisch herausgeschlagen. Diese mechanische Wirkung der Kühlwasserstrahlen ist deshalb von Vorteil, weil bis zu 70 % der geruchsaktiven Substanzen nicht wasserlöslich sind.

Zur Durchführung des erfindungsgemäßen Verfahrens kann beispielsweise ein rohrförmiger Entspannungskühler in Form eines umgekehrten U dienen, in dessen einen Schenkel die Malzmaische von höchstens ca. 100°C vorzugsweise tangential eingepumpt wird, und in dessen anderen Schenkel vorzugsweise in mehreren Etagen die Spritzdüsen für das Kühlwasser zur Niederschlagung des Dampfes angeordnet sind, der bei der plötzlichen Druckentlastung der Malzmaische erzeugt wird. Exzenterdüsen werden für diesen Zweck bevorzugt, weil diese auch für die erwünschte Ausbildung einer Ablauftrombe im Kondensationsschenkel des Entspannungskühlers sehr wirksam sind. An diesem Kondensationsschenkel ist ein Unterdruckerzeuger (Vakuumpumpe) angeschlossen. Die unteren Enden der Schenkel des Entspannungskühlers in Form des umgekehrten U sind mit einem durch ein Absperrorgan verschließbaren Ablauf für die vakuumbehandelte Malzmaische bzw. mit einem Ablauf für das Kühlwasser und Brüdenkondensat versehen. Dabei wird das Kühlwasser und Brüdenkondensat einerseits und andererseits auch die Maische mittels eines barometrischen Fallrohres oder auch einer Pumpe ausgetragen. Ferner kann die Brüdenkondensation auch an Wärmetauscherflächen erfolgen. In diesem Fall läßt man in das System gezielt Luft als Trägersubstanz für die nicht mit dem Kondensat entfernbaren nicht wasserlöslichen Substanzen einziehen und entfernt diese laufend mit Hilfe einer Vakuumpumpe. Die besten Ergebnisse hinsichtlich der Qualität der aus der vakuumbehandelten Malzmaische gewonnenen Würze erzielt man jedoch mit der oben beschriebenen Einspritzkondensationsmethode.

Die Erfindung wird anschließend anhand der schematischen Zeichnung einer Vorrichtung beschrieben, die als Ausführungsbeispiel zur Durchführung des erfindungsgemäßen Verfahrens dient.

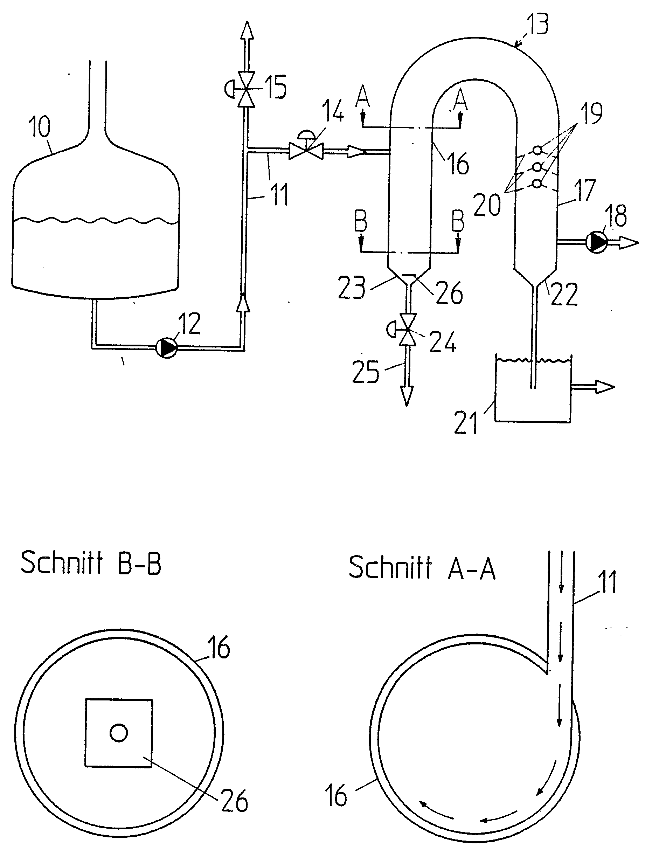

In der Zeichnung ist mit 10 eine Maischepfanne bezeichnet, in der geschrotetes Braumalz mit Brauwasser zur sogenannten Malzmaische vermischt und aufgeheizt wird. Die Malzmaische, die eine Temperatur von höchstens ca. 100°C aufweist, wird zum zusätzlichen Malzaufschluß über eine Maischezuleitung 11 mittels einer Pumpe 12 in einen Entspannungskühler 13 gepumpt. Dabei ist wichtig, daß die Maischezuleitung 11 unmittelbar vor ihrer Einmündung in den Entspannungskühler 13 mittels eines Schiebers 14 abgesperrt gehalten werden kann. Bei Beginn des Maischepumpens zum Entspannungskühler 13 ist die Maischezuleitung 11 von der Maischepfanne 10 bis praktisch zum Entspannungskühler 13 über den Schieber 15 zu entlüften. Ist die Maischezuleitung 11 bis zum Schieber 14 unmittelbar vor dem Entspannungskühler 13 mit Malzmaische gefüllt, kann dieser Schieber 14 geöffnet werden, wobei Vorsorge getroffen werden muß, daß durch ein eigenes Drosselorgan (nicht gezeigt) oder durch entsprechende Einstellung des Schiebers 14 die Malzmaische vor ihrem Eintritt in den Entspannungskühler 13 immer unter einem geringen Überdruck gehalten wird. Bei Nichtbeachtung dieser Bedingung kommt es sonst in der Maischezuleitung 11 zu einer Verdampfung, die sich in Form von Schaumbildung im Entspannungskühler 13 selbst auswirken würde, wobei dieser Schaum dann mit den Brüden in den Kondensatorteil des Entspannungskühlers 13 gerissen würde. Die Folge wäre ein unerwünschter Maischeverlust.

Der Entspannungskühler 13 besteht beispielsweise aus einem rohrförmigen Gebilde in der Gestalt eines umgekehrten U, in dessen einen Schenkel 16 die Maischezuleitung 11 vorzugsweise tangential einmündet. Man erreicht dadurch eine Feinverteilung der Malzmaische entlang der Innenwandung des Schenkels 16 des Entspannungskühlers 13, wie im Schnitt A - A durch die Pfeile angedeutet. Am anderen Schenkel 17 des Entspannungskühlers 13 ist ein Unterdruckerzeuger bzw. eine sogenannte Vakuumpumpe 18 angeschlossen, dieser Schenkel 17 enthält den Kondensatorteil des Entspannungskühlers 13. Der Kondensatorteil besteht im vorliegenden Fall beispielsweise aus in mehreren Etagen angeordneten Exzenterdüsen 19 zur Erzeugung von Kühlwasserstrahlen 20, die den beim Eintritt der Malzmaische von ca. 100°C in den Entspannungskühler 13 entstehenden Dampf als Kondensat niederschlagen. Das Kühlwasser und Brüdenkondensat fließt in ein Überlaufgefäß 21 ab. Es könnte aber auch durch eine Pumpe (nicht gezeigt) abgezogen werden. Die Kühlwasserstrahlen 20 "schlagen" die nicht wasserlöslichen Substanzen aus den Brüden heraus, diese werden mit dem Kondensat ausgetragen. Dabei führt diese Kühlwasser-Strahlführung zu einer intensiv saugenden Ablauftrombe im Ablaufkonus 22 des Entspannungskühlers 13, die durch konstruktive Maßnahmen zweckmäßig noch verstärkt werden kann.

Im Gegensatz hierzu sollte sich im Ablaufkonus 23 am unteren Ende des Schenkels 16 des Entspannungskühlers 13 keine Ablauftrombe in der ablaufenden, vakuumbehandelten Malzmaische ausbilden. Zu diesem Zweck ist beim Ausführungsbeispiel eine quadratische Verteilerplatte 26 für die Malzmaische in entsprechendem Abstand von der Innenwandung des Ablaufkonus 23 horizontal angeordnet. Zusätzlich oder anstelle dieser Maßnahme kann auch eine Ablaufregelung, beispielsweise über den Schieber 24 erfolgen, um diese Ablauftrombe zu verhindern. Über das Ablaufrohr 25 wird bei geöffnetem Schieber 24 die vakuumbehandelte Malzmaische ausgetragen und mit einer kleinen, nicht vkauumbehandelten Restmenge von etwa 30 % der Gesamtmaischemenge vermischt, so daß der notwendige enzymatische Abbau erfolgen kann. Alsdann kann die Malzmaische der weiteren Sudhausprozedur im Zuge der Biererzeugung unterworfen werden.

Während der Vakuumbehandlung der Malzmaische in dem Entspannungskühler 13 wird durch die Vakuumpumpe 18 in diesem ein Druck von beispielsweise ca. 200 mbar absolut erzeugt, die Temperatur der ablaufenden Malzmaische beträgt ca. 60° C.

## Ansprüche

1. Verfahren zum zusätzlichen Aufschluß von Malzinhaltsstoffen bei Maischen für die Biererzeugung, dadurch gekennzeichnet, daß die Malzmaische mit einer Temperatur von höchstens ca. 100° C zur plötzlichen Druckentlastung in einen unter Unterdruck stehenden Entspannungskühlraum geführt und die abgekühlte Malzmaische mit technischen Enzymen oder einer enzymhaltigen Malzmaischemenge vermischt wird, die nur einen Bruchteil der Gesamtmaischemenge ausmacht.

2. Verfahren nach Anspruch 1, dadurch gekennzeichnet, daß die Malzmaische fein verteilt in den Entspannungskühlraum eingepumpt wird.

3. Verfahren nach Anspruch 1 oder 2, dadurch gekennzeichnet, daß die Malzmaische vor ihrem Eintritt in den Entspannungskühlraum unter geringem Druck gehalten wird.

4. Verfahren nach Anspruch 1, dadurch gekennzeichnet, daß die Vermischung der Malzmaische mit technischen Enzymen oder einer enzymhaltigen Malzmaische-Teilmenge sofort nach erfolgtem zusätzlichen Malzaufschluß stattfindet.

5. Verfahren nach Anspruch 1, dadurch gekennzeichnet, daß die beim Eintritt der Malzmaische in den Entspannungskühlraum erzeugten Brüden in einen Kondensationsraum geführt und durch Kühlwasserstrahlen niedergeschlagen werden.

EP 0 297 428 A1

Schnitt B-B

Schnitt A-A

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 343 706 (G.T. REICH) <br> * Anprüche 1-7 * | 1-5 | C 12 C 7/00 |
| X,D | US-A-2 451 510 (E.C. PATTEE) <br> * Anspruch * | 1-4 | |
| A | DE-A-3 119 .136 (E. SCHNECK) <br> * Anspruch 1; Seite 6, Zeilen 18-30; Seite 12, Zeile 1 - Seite 13, Zeile 12 * | 1-5 | |
| A | DE-A-1 811 311 (FORSCHUNGSINSTITUT FÜR DIE GÄRUNGSINDUSTRIE) <br> * Ansprüche 1-3; Seite 1 - Seite 2, Absatz 2; Beispiel 2 * | 1-4 | |
| A | DE-C- 914 843 (J. CARL) <br> * Ansprüche 1,3,6 * | 1-4 | |

RECHERCHIERTE SACHGEBIETE (Int. Cl.4)

C 12 C

Der vorliegende Recherchenbericht wurde für alle Patentansprüche erstellt

| Recherchenort | Abschlußdatum der Recherche | Prüfer |
|---|---|---|
| DEN HAAG | 07-10-1988 | WIESER, M.R.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)